Europäisches Patentamt

European Patent Office

Office européen des brevets

(11) Publication number : **0 668 322 A1**

(12) # EUROPEAN PATENT APPLICATION

(21) Application number : **95300890.1**

(22) Date of filing : **14.02.95**

(51) Int. Cl.[6] : **C08L 63/00, C08L 65/00,
// (C08L63/00, 65:00)**

(30) Priority : **16.02.94 JP 19119/94**

(43) Date of publication of application :
**23.08.95 Bulletin 95/34**

(84) Designated Contracting States :
**CH DE FR GB LI NL**

(71) Applicant : **MITSUI TOATSU CHEMICALS, Inc.**
**2-5 Kasumigaseki 3-chome**
**Chiyoda-Ku Tokyo 100 (JP)**

(72) Inventor : **Kawabata, Tomoyuki**
**5, Takiharucho,**
**Minami-ku**
**Nagoya-shi, Aichi-ken (JP)**
Inventor : **Iimuro, Shigeru**
**5-6-I-104, Takiharucho,**
**Minami-ku**
**Nagoya-shi, Aichi-ken (JP)**
Inventor : **Yuasa, Teruo**
**182, Miyawake,**
**Shimonoishikicho**
**Nakagawa-ku, Nagoya-shi, Aichi-ken (JP)**

(74) Representative : **Holdcroft, James Gerald, Dr.**
**et al**
**Graham Watt & Co.,**
**Riverhead**
**Sevenoaks, Kent TN13 2BN (GB)**

(54) Liquid epoxy resin compositions for sealing.

(57) A liquid epoxy resin composition for sealing, comprising (A) an alicyclic epoxy resin, (B) a phenolaralkyl resin and (C) a curing accelerator ; and having excellent heat resistance and moisture resistance.

EP 0 668 322 A1

## BACKGROUND OF THE INVENTION

(a) Field of the Invention

This invention relates to liquid epoxy resin compositions for sealing. Specifically, the present invention is concerned with liquid epoxy resin compositions for sealing, which have excellent heat resistance and moisture resistance to protect surfaces of electric and electronic devices. More specifically, the present invention pertains to liquid epoxy resin compositions for sealing, which are designed to seal components of electric and electronic devices such as ICs or LSIs on circuit boards.

b) Description of the Related Art

ICs, LSIs and the like have heretofore been used by molding them with an epoxy resin, ceramics or the like and mounting them on circuit boards. Reflecting the increasing demand for diversification and reductions in weight and dimensions of electric and electronic equipments or products in recent years, it is becoming the mainstream to mount ICs, LSIs or the like by using, as a method for reducing the packaging area or volume, the surface mounting technique which directly connects the ICs, LSIs or the like to a circuit board. Semiconductor components directly mounted on the circuit board are usually sealed with a liquid epoxy resin. For sealing materials of this type, still higher reliability than that required for transfer molding materials, particularly, excellent heat resistance and moisture resistance are required.

To meet these requirements, liquid epoxy resin compositions containing a phenol resin have been proposed (Japanese Patent Laid-Open No. 308109/1993). These liquid epoxy resin compositions, however, employ a novolak resin as the phenol resin. They are hence accompanied by the drawback that their moisture resistance is low.

## SUMMARY OF THE INVENTION

An object of the present invention is to provide a liquid epoxy resin composition for sealing, which is excellent in heat resistance and moisture resistance.

The above-described object of the present invention can be attained by a liquid epoxy resin composition for sealing, comprising:

(A) an alicyclic epoxy resin;

(B) a phenolaralkyl resin; and

(C) a curing accelerator.

The liquid epoxy resin composition for sealing according to the present invention is excellent in both heat resistance and moisture resistance, so that it has high reliability in sealing electric or electronic components such as semiconductor components and makes it possible to prolong the service lives of the electric or electronic components.

## DESCRIPTION OF THE PREFERRED EMBODIMENTS

The term "alicyclic epoxy resin" as used herein means alicyclic epoxy resins such as (3',4'-epoxy-cyclohexylmethyl)-3,4-epoxycyclohexanecarboxylate, (3',4'-epoxy-6'-methylcyclohexylmethyl)-3,4-epoxy-6-methylcyclohexanecarboxylate; and glycidyl ethers of cyclic terpene-phenol copolymer such as glycidyl ethers of dicyclopentadiene-phenol copolymer. These alicyclic epoxy resins can be used either singly or in combination.

Among these, preferred is (3',4'-epoxycyclohexylmethyl)-3,4-epoxycyclohexanecarboxylate.

A description is now made of the phenolaralkyl resin. A phenolaralkyl resin is a resin obtained by subjecting a phenol compound and an aralkyl compound to condensation by a Friedel-Crafts reaction and is hence called a "Friedel-Crafts resin".

To obtain a phenolaralkyl resin useful in the practice of the present invention, a phenol compound is added generally in a range of 1.0-4.0 moles, preferably in a range of 1.5-3.0 moles per mole of an aralkyl compound. The resulting mixture is heated, as is, in the presence of an acid catalyst and is then reacted at a temperature to be described subsequently. After completion of the reaction, unreacted phenol obviously remains. It is the above-described phenolaralkyl resin that is obtained by distilling out the unreacted phenol *in vacuo.*

Any compound can be used as the phenol compound in this reaction insofar as it contains a phenolic hydroxyl group. Usable phenol compounds can include, for example, phenol, alkyl-substituted phenols such as o-cresol, p-cresol, m-cresol, 2,6-xylenol and p-tert-butylphenol, aromatic-substituted phenols such as p-phenylphenol, and naphthols such as $\alpha$-naphthol and $\beta$-naphthol.

2

An aromatic compound, which contains two halo-methyl groups, hydroxymethyl groups, alkoxymethyl groups or the like and can undergo addition through condensation, can be used as the aralkyl compound in this reaction. Usable aralkyl compounds can include, for example, dihalomethyl aromatic compounds such as $\alpha,\alpha'$-dichloro-p-xylene, $\alpha,\alpha'$-dichloro-m-xylene and $\alpha,\alpha'$-dichloro-o-xylene; dihydroxymethyl aromatic compounds such as p-xylyleneglycol; and dialkoxymethyl aromatic compounds such as $\alpha,\alpha'$-dimehtoxy-p-xylene, $\alpha,\alpha'$-dimethoxy-m-xylene and $\alpha,\alpha'$-dimethoxy-o-xylene.

Illustrative usable examples of the catalyst can include inorganic compounds such as stannic chloride, zinc chloride, ferric chloride, cupric chloride, cupric sulfate, mercurous sulfate, mercuric sulfate, mercurous chloride, mercuric chloride, silver sulfate, silver chloride and sodium hydrogensulfate; sulfuric acid compounds such as sulfuric acid, monoethyl sulfate, diethyl sulfate and dimethyl sulfate; and organosulfonic acids such as p-toluenesulfonic acid, p-phenolsulfonic acid and methanesulfonic acid. These catalysts can be used either singly or in combination. The catalyst can be used in an amount of 0.01-5 wt.% based on the total weight of the phenol compound and the aralkyl compound.

The reaction temperature is usually 110°C or higher. If the reaction temperature is lower than 110°C, the reaction becomes extremely slow. To shorten the reaction time, a temperature range of about 130-240°C is desired. The reaction time is usually 1-20 hours.

Further, an organic solvent of a relatively high boiling point can be used if desired. Illustrative usable organic solvents can include alcohols such as methanol, ethanol, n-propanol, isopropanol, n-butanol and tert-butanol; and aromatic compounds such as toluene, xylene and mesitylene.

Regarding the mixing ratio of the alicyclic epoxy resin to the phenolaralkyl resin, it is preferred to use 0.8-1.2 equivalents of phenolic hydroxyl group of the phenolaralkyl resin per equivalent of epoxy group of the alicyclic epoxy resin.

As the curing accelerator, curing accelerators usable for curing general epoxy resins can be employed. Preferred are organophosphine compounds and nitrogen-containing cyclic compounds. They can be used either singly or in combination.

Illustrative organophosphine compounds can include, but are not limited to, phosphine compounds such as triphenylphosphine and tritolylphosphine; phosphine oxide compounds such as triphenylphosphine oxide; and phosphine-borane complexes such as tetraphosphonium tetraphenylborate and triphenylphosphine triphenylborane. They can be used either singly or in combination.

The nitrogen-containing cyclic compounds can include, but are not limited to, imidazole compounds such as 2-ethyl-4-methylimidazole, 2-phenyl-4-methyl-5-hydroxymethylimidazole and 2-phenyl-4,5-dihydroxymethylimidazole; and heterocyclic nitrogen-containing compounds such as 1,8-diazabicyclo(5,4,0)undeca-7-ene. They can be used either singly or in combination.

The curing accelerator such as an organophosphine compound or a nitrogen-containing cyclic compound can be added preferably in an amount of 0.05-5 parts by weight per 100 parts by weight of the alicyclic epoxy resin, with a range of 0.1-2 parts by weight being particularly preferred.

The melting viscosity of the composition according to the present invention may preferably be not higher than 50 poise (100°C). Melting viscosities higher than 50 poise tend to decrease the composition in fluidity and molding processability.

To adjust the viscosity, the composition according to the present invention can be added with an organic solvent as needed. Illustrative examples of the organic solvent can include ketones such as methyl ethyl ketone and alcohols such as benzyl alcohol and butyl cellosolve. It is preferred to limit the amount of the organic solvent to 30 wt.% or less based on the composition, with 10 wt.% or less being more preferred. It is, however, most preferred not to add any organic solvent for the adjustment of the viscosity. The organic solvent does not fully evaporate in the course of curing and remains in the resulting resin, so that the organic solvent may cause a reduction in the heat resistance and moisture resistance of a cured product.

In addition, various other components can be added as needed, For example, fillers such as silica, alumina, talc and clay, flame retardants such as antimony trioxide, colorants such as carbon black, and flexibilizers such as acrylonitrile-butadiene rubber and silicone oil can be added.

The present invention will hereinafter be described in further detail by the following examples and comparative examples. Evaluations or measurements of individual various characteristic values in the examples were conducted by the following methods (1) to (4).

(1) Melting viscosity

Each melting viscosity was measured at 100°C by using an "ICI Cone & Plate Viscometer" (trade name; manufactured by Research Equipment, Ltd., London).

(2) Glass transition temperature

Each glass transition temperature was determined by measuring the coefficient of linear expansion by "TMA 8146" (trade name: manufactured by Rigakusha K.K. in accordance with TMA (thermomechanical analysis)

(3) Phenolic hydroxyl equivalent of resins

The hydroxyl group in a resin was acetylated with acetic anhydride in the presence of pyridine catalyst. Excess reagent was hydrolyzed with water and titration was carried out using hydroxide potassium-alcohol solution to check the resulting acetic acid.

The phenolic hydroxyl equivalent or OH equivalent was obtained according to the following formulas.

$$\text{OH Value (KOH mg/g)} = 28.05 \times (B - A) \times F \div S$$
$$\text{OH Equivalent (g/eq)} = 56.11 \times 10^3 \div \text{OH Value}$$

wherein:

A:     an amount of 0.5N hydroxide potassium-alcohol solution used to the end point in titration (m$\ell$)

B:     an amount in a blank test corresponding to A (m$\ell$)

F:     a factor of 0.5N hydroxide potassium-alcohol solution (-)

S:     an amount of a sample (g)

(4) Epoxy equivalent of epoxy resins

An epoxy resin was dissolved in a mixture of chloroform and acetic acid. To the resulting solution was added an acetic acid solution of tetraethylammonium bromide and titration was carried out using 0.1N acetic acid perchlorate solution and glass and relative electrodes. The epoxy equivalent was obtained according to the following formulas.

$$f = 1000 \times m_1 \div (204.23 \times 0.1 \times (V_1 - V_2))$$

wherein:

f:     a factor of 0.1N acetic acid perchlorate solution (-)

$m_1$:     an amount of potassium hydrogenphthalate (g)

$V_1$:     an amount of 0.1N acetic acid perchlorate solution used to the end point in titration (m$\ell$)

$V_2$:     an amount in a blank test corresponding to $V_1$ (m$\ell$)

$$EE = 1000 \times m_2 \div (0.1 \times f \times (V_3 - V_4))$$

wherein:

EE:     an epoxy equivalent (g/eq)

$m_2$:     an amount of a sample (g)

f:     a factor of 0.1N acetic acid perchlorate solution (-)

$V_3$:     an amount of 0.1N acetic acid perchlorate solution used to the end point in titration (m$\ell$)

$V_4$:     an amount in a blank test corresponding to $V_3$ (m$\ell$)

«Production Example of Phenolaralkyl Resins»

In a reactor equipped with a condenser through which cooling water of 70°C was flowing, 714.4 g (7.60 moles) of phenol, 31.8 g of methanol and 0.853 g of diethyl sulfate were charged. The contents were heated under stirring over an oil bath. When the liquid temperature reached 140°C, charging of α,α'-dimethoxy-p-xylene was initiated. After 800 g (4.81 moles) of α,α'-dimethoxy-p-xylene were continuously charged over 4 hours, an aging reaction was conducted for further 90 minutes at the mixture temperature of 140°C. The mixture temperature was next raised to 160°C, at which unreacted phenol was removed under reduced pressure so that 1,025 g of a resin (phenolic hydroxyl group: 178 g/eq) was obtained.

Example 1

Based on the corresponding mixing ratio shown in Table 1, the phenolaralkyl resin obtained in the Production Example, an alicyclic epoxy resin ("Araldite CY-179", trade name; product of Ciba-Geigy AG, epoxy group 126 g/eq) and an imidazole compound ("2E4MZ", trade name; product of Shikoku Chemicals Corp.) were mixed into a liquid epoxy resin composition at room temperature.

Example 2

Based on the corresponding mixing ratio shown in Table 1, the phenolaralkyl resin obtained in the Production Example, the alicyclic epoxy resin ("Araldite CY-179", trade name; product of Ciba-Geigy AG, epoxy group: 126 g/eq), the imidazole compound ("2E4MZ", trade name; product of Shikoku Chemicals Corp.) and, as an organic solvent, methyl ethyl ketone were mixed into a liquid epoxy resin composition at room temperature.

Comparative Example 1

Based on the corresponding mixing ratio shown in Table 1, a phenol novolak resin ("#2000", trade name; product of Mitsui Toatsu Chemicals Inc., phenolic hydroxyl group: 103 g/eq), the alicyclic epoxy resin ("Araldite CY-179", trade name; product of Ciba-Geigy AG, epoxy group: 126 g/eq) and the imidazole compound ("2E4MZ", trade name; product of Shikoku Chemicals Corp.) were mixed into a liquid epoxy resin composition at room temperature.

Comparative Example 2

Based on the corresponding mixing ratio shown in Table 1, the phenol novolak resin ("#2000", trade name; product of Mitsui Toatsu Chemicals Inc., phenolic hydroxyl group: 103 g/eq), the alicyclic epoxy resin ("Araldite CY-179", trade name; product of Ciba-Geigy AG, epoxy group: 126 g/eq), the imidazole compound ("2E4MZ", trade name; product of Shikoku Chemicals Corp.) and, as an organic solvent, methyl ethyl ketone were mixed into a liquid epoxy resin composition at room temperature.

«Production Example of Cured product»

The liquid epoxy resin compositions obtained in Examples 1 and 2 and Comparative Examples 1 and 2 were formed into cast plates of about 2 mm in thickness for use in evaluation. Curing was conducted at 180°C for 5 hours.

The glass transition temperatures (Tg) of the cured products so obtained are shown in Table 1.

Table 1

| | Example 1 | Example 2 | Comparative Example 1 | Comparative Example 2 |
|---|---|---|---|---|
| Alicyclic epoxy resin | 100 (1 equiv.) | 100 (1 equiv.) | 100 (1 equiv.) | 100 (1 equiv.) |
| Phenolaralkyl resin | 141 (1 equiv.) | 141 (1 equiv.) | - | - |
| Phenol novolak resin | - | - | 82 (1 equiv.) | 82 (1 equiv.) |
| "2E4MZ" | 1 | 1 | 1 | 1 |
| Methyl ethyl ketone | - | 103[1] | - | 78[1] |
| Melting viscosity (poise) | 34 | ≤0.1 | 19 | ≤0.1 |
| Curing conditions (°C/hr) | | 180/5 | | |
| Tg of the cured product (°C) | 138 | 133 | 130 | 126 |
| Boiling water absorption (%)[2] | 0.49 | 0.54 | 0.72 | 0.76 |

The unit of the proportion of each component in each composition in the table is "parts by weight".
1) Methyl ethyl ketone accounted for 30 wt.% of the weight of the composition.
2) Each boiling water absorption was determined by boiling the cured product at 100°C for 2 hours and then conducting calculation in accordance to the following formula:

Boiling water absorption = [(the weight of a sample after boiling − the weight of the sample before the boiling)/the weight of sample before the boiling] x 100.

6

**Claims**

1. A liquid epoxy resin composition for sealing, comprising:
   (A) an alicyclic epoxy resin;
   (B) a phenolaralkyl resin; and
   (C) a curing accelerator.

2. A composition according to claim 1, wherein the composition has a melting viscosity not higher than 50 poise at 100°C.

3. A composition according to claim 1, wherein the curing accelerator is at least one compound selected from the group consisting of organophosphine compounds and nitrogen-containing cyclic compounds.

4. A composition according to claim 1, wherein the alicyclic epoxy resin is at least one resin selected from the group consisting of (3',4'-epoxycyclohexylmethyl)-3,4-epoxycyclohexanecarboxylate, (3',4'-epoxy-6'-methylcyclohexylmethyl)-3,4-epoxy-6-methylcyclohexanecarboxylate, and glycidyl ethers of dicyclopentadiene-phenol copolymer.

5. A composition according to claim 1, wherein the alicyclic epoxy resin is (3',4'-epoxycyclohexylmethyl)-3,4-epoxycyclohexanecarboxylate.

6. A composition according to claim 1, wherein a phenol compound used to obtain the phenolaralkyl resin is at least one phenol compound selected from the group consisting of phenol, o-cresol, p-cresol, m-cresol, 2,6-xylenol, p-tert-butylphenol, p-phenylphenor, $\alpha$-naphthol and $\beta$-naphthol.

7. A composition according to claim 1, wherein an aralkyl compound used to obtain the phenolaralkyl resin is at least one aralkyl compound selected from the group consisting of $\alpha,\alpha'$-dichloro-p-xylene, $\alpha,\alpha'$-dichloro-m-xylene, $\alpha,\alpha'$-dichloro-o-xylene, p-xylyleneglycol, $\alpha,\alpha'$-dimethoxy-p-xylene, $\alpha,\alpha'$-dimethoxy-m-xylene and $\alpha,\alpha'$-dimethoxy-o-xylene.

8. A composition according to claim 1, wherein the composition contains 0.8-1.2 equivalents of phenolic hydroxyl group of the phenolaralkyl resin per equivalent of epoxy group of the alicyclic epoxy resin.

9. A composition according to claim 1, wherein the composition contains 0.05-5 parts by weight of the curing accelerator per 100 parts by weight of the alicyclic epoxy resin.

10. A composition according to claim 1, which is free of any organic solvent.

EP 0 668 322 A1

**European Patent Office**

# EUROPEAN SEARCH REPORT

Application Number

| DOCUMENTS CONSIDERED TO BE RELEVANT | | | EP 95300890.1 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| X | <u>DE - A - 4 210 129</u><br>(NIPPON OIL CO LTD.)<br>  * Page 2, line 43 -<br>    page 4, line 39;<br>    page 4, lines 52-65;<br>    examples; claims * | 1,3,6,<br>9,10 | C 08 L 63/00<br>C 08 L 65/00<br>//(C 08 L 63/00<br>C 08 L 65:00) |
| A | -- | 4,7,8 | |
| A | DERWENT ACCESSION<br>no. 93-232 522(29), Questel<br>Telesystems (WPIL)<br>DERWENT PUBLICATIONS LTD.,<br>London;<br>& JP-A-05 156 126 (SHINETSU)<br>  * Abstract * | 1-10 | |
| A | DERWENT ACCESSION<br>no. 88-334 925(47), Questel<br>Telesystems (WPIL)<br>DERWENT PUBLICATIONS LTD.,<br>London;<br>& JP-A-63 248 823 (TOSHIBA)<br>  * Abstract * | 1-10 | TECHNICAL FIELDS SEARCHED (Int. Cl.6)<br><br>C 08 L<br>C 08 G<br>C 09 D |

The present search report has been drawn up for all claims

| Place of search | Date of completion of the search | Examiner |
|---|---|---|
| VIENNA | 10-05-1995 | TENGLER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                           
& : member of the same patent family, corresponding
    document

EPO FORM 1503 03.82 (P0401)

8